# EUROPEAN PATENT APPLICATION

(11) **EP 0 639 817 A1**
(43) Date of publication of application: **22.02.1995**
(21) Application number: 94202364.9
(22) Date of filing: 19.08.1994
(51) Int. Cl.: G06K 7/12, G06K 19/07, H04L 27/18, H04L 7/033, G06K 7/08, G06K 7/10

(54) **Identification or smart card system, correlator circuit and synchronisation circuit suitable for use in such a system**

(30) Priority: 20.08.1993 NL 9301454
(71) Applicant: N.V. Nederlandsche Apparatenfabriek NEDAP, NL-7141 DE Groenlo (NL)
(72) Inventor: Fockens, Tallienco W. H., NL-7152 GV Eibergen (NL); Kip, Harm J., NL-7132 CS Lichtenvoorde (NL); Grevink, Gerrit J. W., NL-7105 CN Winterswijk (NL)
(74) Representative: Smulders, Theodorus A.H.J., Ir.

(57) **Abstract**

A data detector for a differential biphase modulated signal, in particular for identification systems. The invention is based on the solution given by the stochastic detection theory, however, with an adjustment such that the realisation is simplified. Also provided is an adequate synchronisation circuit.

The entire data detector circuit can be realized as an algorithm in a digital signal processor.

## Description

The invention relates to an identification or smart card system comprising a reader unit and at least one responder which codes data bits, comprising means for modulating a subcarrier with information representing data bits by means of differential biphase modulation of a subcarrier to obtain a differential biphase modulated signal which is radiated by the responder to be detected by the reader unit, the reader unit comprising a data detector for recovering the data bits from the received differential biphase modulated signal.

Such a system is known per se, the detector unit comparing the received biphase signal with a zero level. Of the thus obtained binary signal, the moments are determined at which the binary signal passes the zero level. On the basis of this information the data bits to be recovered are subsequently determined. Accordingly, the phase of the received signal is a relevant parameter here. Because the noise present in the system is relatively large in relation to the binary signal at the moment when the binary signal passes a zero-axis crossing, an accurate detection precisely requires a high signal to noise ratio, so that high requirements are imposed on the system, which are often technically unfeasible or economically unattractive.

The invention meets the above-mentioned disadvantages and has as a characteristic feature that the data detector comprises a correlator circuit which multiplies the received differential biphase signal by a template signal and integrates the signal obtained upon multiplication over an integration period which runs over a last part of the time span in which a first data bit is present and a subsequent initial part of a time span in which a second data bit, following the first data bit, is present, the correlator circuit processing the outcome of the integration performed over a first period in combination with the outcome of an integration which has been performed over a second period directly following the first period for recovering said data bits.

Accordingly, according to a particular aspect of the invention only one correlator circuit is used.

It is further observed that systems are known in which the data bits are recovered using two correlators. However, these systems work according to an entirely different principle.

The invention will be explained hereinafter with reference to the drawing. In the drawing:
Fig. 1 shows an example of the way in which a differential biphase modulated signal is obtained;
Fig. 2 shows an embodiment of a system in which the invention can be used;
Fig. 3 shows two occurring signal forms of Fig. 1, line 3;
Fig. 4 shows an embodiment of a data detector according to Fig. 2 comprising two correlators;
Fig. 5 shows a series of signal forms in illustration of the operation of the data detector according to Fig. 4;
Fig. 6 shows a first embodiment according to the invention of a data detector of Fig. 2;
Fig. 7 shows a series of signal forms in illustration of the operation of the data detector according to Fig. 6;
Fig. 8 shows a second embodiment according to the invention of a data detector of Fig. 2;
Fig. 9 shows a series of signal forms in illustration of the operation of the data detector according to Fig. 8; and
Fig. 10 shows a series of signal forms in illustration of the operation of the data detector according to Fig. 8.

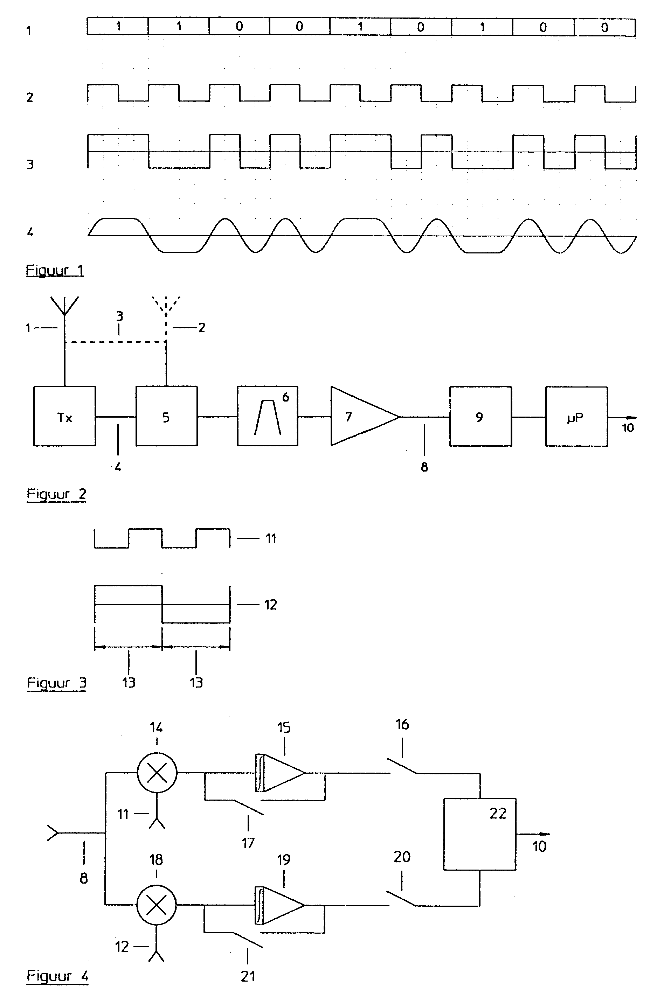

An identification system or smart card system often comprises an identification reader and a plurality of identification labels, also referred to as responders. The identification reader radiates an interrogation field to which an identification label reacts when the label is introduced into the interrogation field. To that end, the label for instance comprises a receiver and transmitter circuit with a signal processing unit coupled thereto. The interrogation field received by the receiver and transmitter circuit is, for instance, subsequently reradiated in modulated form. The modulation then comprises information in the form of a binary code of data bits which has been provided by the signal processing unit of the label in reaction to the received interrogation field. To that end, the signal processing unit comprises, for instance, a memory from which the data bits (information such as for instance identification information) are read out. In particular, a subcarrier is modulated to obtain a differential biphase signal whose properties will be further explained with reference to Fig. 1. The interrogation field is then in its turn modulated with the biphase signal. The identification reader detects the differential biphase signal from the modulated interrogation field and decodes the detected signal for obtaining the data bits referred to.

Fig. 1 shows an example of the way in which a differential biphase coded signal can be obtained. Line 1 of Fig. 1 shows a string of data bits (binary code), also referred to as a data bit stream, line 2 shows an unmodulated subcarrier, which also functions as clock signal for reading out the data bits from the memory of the label. Line 3 shows the differential biphase signal which is the result of the data bits of line 1.

The differential biphase signal is the subcarrier modulated with data bits, with which the interrogation field is modulated in a manner known per se. This means that - for the purpose of this last modulation - the differential biphase signal is frequency-transformed to side bands of the interrogation field. The thus modulated interrogation field is detected by a receiver of the identification reader and frequency-transformed - i.e. demodulated - so that the biphase signal is recovered from the side bands. Because of narrow-band filtering in the receiver, a large part of the higher harmonics of the biphase signal are lost, so that the original, square signal is deformed to sinusoidal, as shown in line 4. It is observed that other methods are conceivable as well for transmitting the biphase signal wirelessly from the label to the reader unit. Thus, for instance, the biphase signal itself can be radiated. It is essential, however, that the reader unit can detect the biphase signal.

To enable the data bits to be recovered from the differential biphase signal, this biphase modulated (coded) signal should be demodulated (decoded). This modulation is binary, i.e., the modulated signal has only two forms; one form is the result of the modulation with a '0' data bit, the other with the '1' data bit. The identification reader comprises a data detector coupled with the receiver to recover the data bits from the received modulated analog signal by making the decision for each bit which form the received signal has and by coupling the binary values 0 or 1 thereto. These decisions will not always be correct. It is the quantity of incorrect decisions in relation to the signal to noise ratio of the received signal which determines the quality of the detector.

In detectors according to the prior art, the detection of the data bits is performed by measuring the time between successive zero-axis crossings of the biphase signal.

Fig. 2 shows a block diagram of an identification reader or reader unit with an operation according to the above-described principle. A transmitter Tx generates the interrogation signal which is converted by an antenna coil 1 to a primary magnetic alternating field (interrogation field). A secondary magnetic alternating field is radiated by an identification label not shown here, which is located in the primary magnetic alternating field. The label accordingly reacts to the primary magnetic alternating field. The label is of a generally known type and will therefore not be discussed in further detail here. It is observed, however, that the label transmits information (data bits) in reaction to the interrogation field by modulating the secondary alternating field with the data bits to be transmitted. As discussed in relation to Fig. 1, the secondary alternating field will mostly consist of the primary alternating field which has been modulated by the label. The secondary field induces in known manner - according to the absorption principle - a voltage in transmitting antenna 1 (absorption system) or a voltage - according to the transmission principle - in a receiving antenna 2 (transmission system) - A receiver mixer 5 carries out an inverse frequency transformation and comprises, when the absorption system is used, a single diode detector which is connected with the transmitting antenna 1 via a connection 3. If a transmission system is used, however, then the receiver mixer 5 comprises a synchronous detector which is controlled with a reference signal of the transmitter Tx via a connection 4 and with a received label signal from receiving antenna 2. After filtration in a bandpass filter 6 and amplification in an amplifier 7, a received biphase signal, as drawn in Fig. 1, line 4, is present on the connection 8. Comparator circuit 9 now compares this biphase signal with a zero level. The resultant binary signal in principle has a form as shown in Fig. 1, line 3 and is applied to an input of microprocessor µP, which carries out the time measurement between the transition moments, i.e. the zero-axis crossings, and detects the data bits therefrom. This detection method is a form of parameter assessment in which the phase of the received signal is the relevant parameter. This method is suitable when the parameter can have analog values or many discrete values. But for the detection of the data bits from the bivalently modulated biphase signal (Fig. 1, line 4) this identification reader is not optimal. This can simply be seen on the basis of the fact that the zero-axis crossing moments can easily be shifted in time as a result of noise. More than that, additional zero crossings may arise through noise, so that according to the detection algorithm of the microprocessor µP several data bits may be lost. It is also clear that the detection decisions are made at moments when the received power of the label signal is minimal, viz. on the zero crossings, which partly coincide with the bit boundaries, see Fig. 1, lines 1, 3 and 4. As a consequence thereof, a relatively high signal to noise ratio is necessary for a low-error detection.

The stochastic detection theory provides an answer to the question what the optimum detection method is for a given signal. For signals whose frequency and phase are known, for that purpose a correlator receiver is used in which the received signal is multiplied by its own signal form, the so-called template signal and whose outcome is integrated over the time duration of the signal. In this method the signal form is recognized in its entirety, utilizing all energy present in the signal. If the signal can assume two forms, as the present biphase signal (label signal), then two parallel correlators are necessary, each having a template signal associated with the two signal forms. The outcomes of the two correlators can then be compared with each other. The outcome with the greatest absolute value then indicates the most probable signal form, on the basis of which a detection decision can subsequently be made. Determining the absolute value is necessary because each signal form can appear in two different phases, viz. 0 and 180°, see Fig. 1, line 3. This shows, for instance, that the representations of the first and second '1' data bits differ in phase by 180°. Likewise the representations of the first and third '0' data bits differ 180° in phase.

Fig. 1 already shows the two signal forms.

In Fig. 3 they are drawn explicitly for the sake of clarity. It appears from this that a complete period of the square wave 11 represents the '0' data bit, while a half period of the square wave 12 represents the '1' data bit. The time spans 13 drawn in Fig. 3 indicate the duration of the two signs and hence the integration period in the above-mentioned correlation process.

Fig. 4 shows the principal block diagram of a correlator receiver (data detector) 9, µP which functions according to the above-described method. The correlator receiver shown in Fig. 4 is one possible embodiment of the comparator circuit 9 and processor µP according to Fig. 1. Since two signal forms occur, the data detector comprises two correlators. The corrrelator for the '0' data bit consists of multiplier 14, to which, in addition to the biphase signal 8, a template signal 11 is applied, an integrator 15, a sampling switch 16 and a reset switch 17. Similarly, the correlator for the '1' data bit consists of a multiplier 18 to which, in addition to the biphase signal 8, a template signal 12 is applied, an integrator 19, a sampling switch 20 and a reset switch 21. The output signals of the two correlators are compared in a comparator 22 which provides the data signal 10. The control of the switches 16, 17, 20 and 21 is carried out by a control unit, not shown.

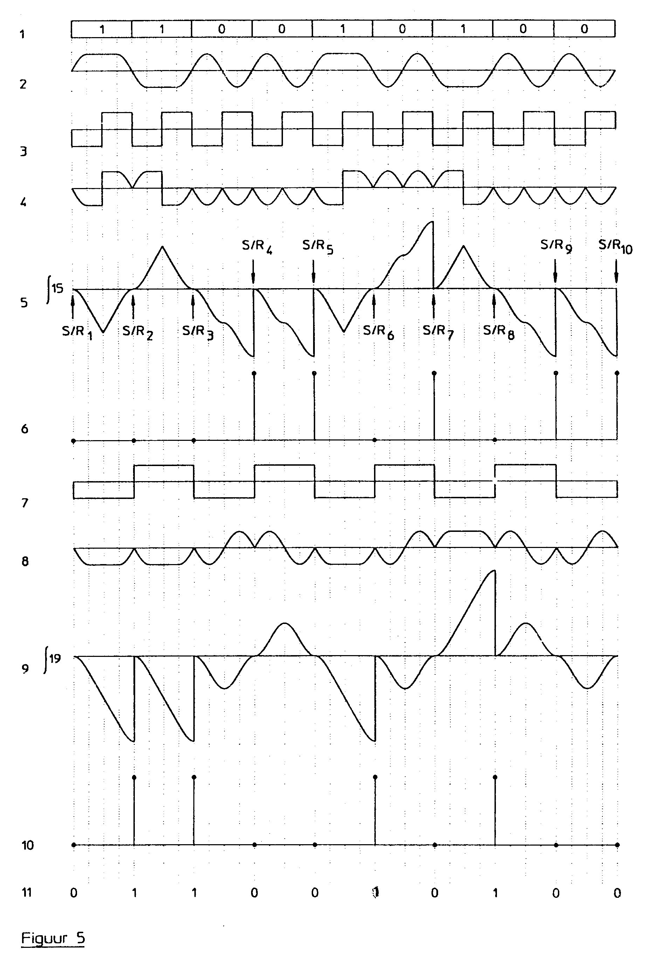

Fig. 5 illustrates the operation of the data detector according to Fig. 4. Line 1 of Fig. 5 shows an example of successive data bits such as they are modulated in the label onto a subcarrier as shown in line 5. Line 2 of Fig. 5 shows the received and filtered differential biphase signal 8 and lines 1 and 2 of Fig. 5 accordingly correspond with lines 1 and 4 of Fig. 1. Line 3 of Fig. 5 shows the template signal for the '0' data bit and line 4 shows the input signal of the integrator 15. Line 5 of Fig. 5 shows the output signal of the integrator 15. The integrator 15 is read out by the comparator 22 by momentarily closing the switch 16 and subsequently reset, at sampling moments which are designated in line 5 of Fig. 5 by S/R₁ through S/R₁₀, by momentarily closing the switch 17. These sampling moments coincide with the boundaries of the original data bits, see line 1. Accordingly, integration occurs over the duration of exactly one data bit. Line 5 also shows that at the moments when the integrator 15 is reset the output voltage of the integrator is zero if a '1' data bit has been transmitted and the output voltage is maximally positive or negative if a '0' data bit has been transmitted.

Fig. 5, line 6 subsequently shows the absolute value of the samples which have been taken. Fig. 5, line 7 shows the template signal for the '1' data bit and line 8 the input signal of the second integrator 19. Line 9 gives the output signal of the integrator 19. Here the output voltage is zero if a '0' data bit has been transmitted and the voltage is maximal if a '1' data bit has been transmitted (positive or negative). Line 10 in turn shows the absolute values of the samples obtained via the integrator 19, which are applied to the comparator 22. A comparison of the samples of line 6 and those of line 10 shows that an unequivocal distinction can be made between a received '0' data bit and a received '1' data bit, so that the detection decision can be based on this. The outcome of that detection decision is depicted in line 11.

The above detection method follows directly from the stochastic detection theory and must therefore be assumed to be known.

This method has the disadvantage that it requires two multipliers 14, 18 and two integrators 15, 19. Also, a control unit with a synchronisation circuit must be added to enable the determination of the integration periods and sampling moments, for instance using a Costas loop. This makes the detector rather elaborate.

The object of the invention is to provide a simpler detector circuit which also provides an optimum detection quality.

The invention makes use of the fact that the frequency of the subcarrier is equal to the bit rate (frequency clock signal), as can be seen in Fig. 1, lines 1 and 2. The modulated biphase signal shown in line 3 of Fig. 1 has as a property that each time a '1' data bit is modulated, the polarity of the biphase signal reverses. This can be seen by the successive '1' data bits in Fig. 1. Also if a row of '0' data bits is interrupted by single '1' data bits, the polarity of the biphase signal changes.

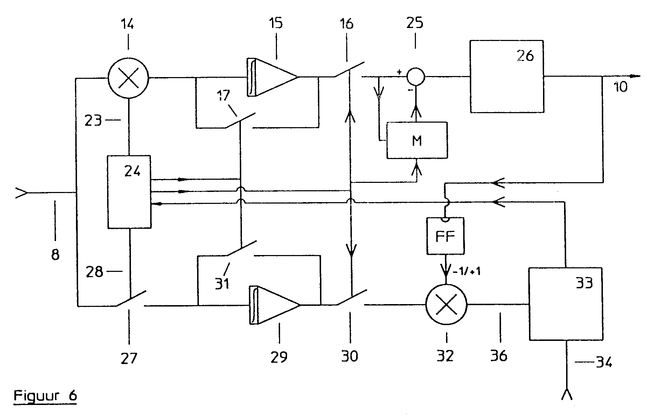

Fig. 6 shows the block diagram of the data detector according to the invention. The detector according to Fig. 6 is a particular embodiment of the comparator circuitry 9 and the microprocessor µP of Fig. 2 is therefore intended to be included accordingly in the reader unit according to Fig. 1. Corresponding parts in Figs. 4 and 6 have been provided with the same reference characters. Accordingly, the data detector of Fig. 6 also comprises the multiplier 14, the integrator 15, the sampling switch 16 and the reset switch 17. These components constitute a correlator as described in relation to Fig. 4. To the multipier 14 a template signal 23 is applied from a timer circuit 24. The template signal 23 is the template associated with the '0' data bit and in this example is equal to the original subcarrier and data clock which has been used for the modulation in the identification label.

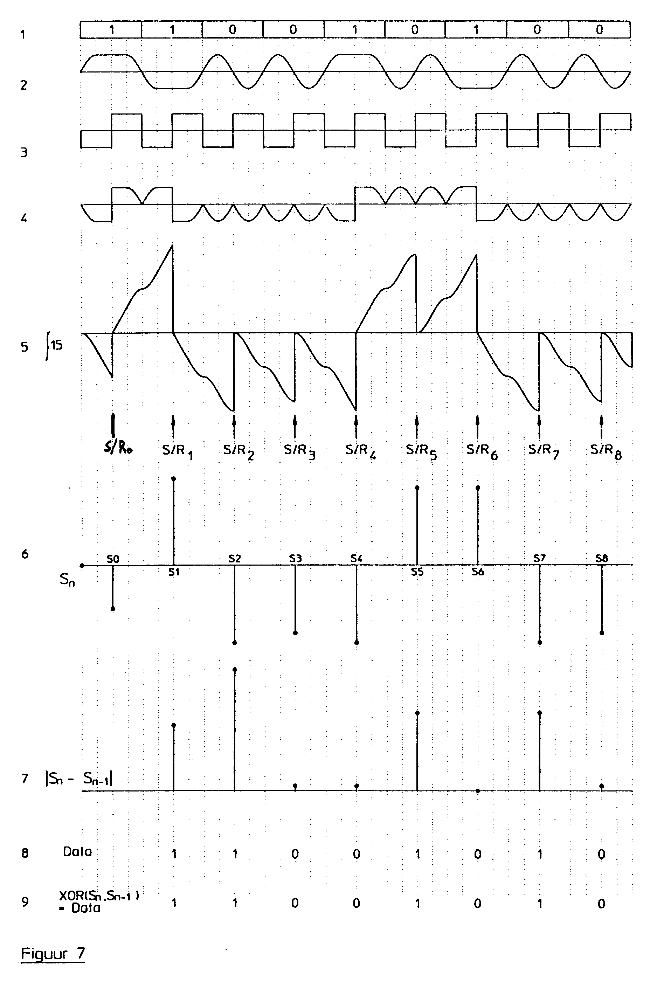

Fig. 7 shows the signals associated with the detector according to Fig. 6. On the basis of these signals the operation of the detector according to Fig. 6 will be explained in more detail. Lines 1, 2, 3 and 4 are identical to lines 1, 2, 3 and 4 according to Fig. 5. Accordingly, line 4 shows the output signal of the integrator 15 according to Fig. 6 and line 3 the template signal 23. However, the integration periods over which the integrator 15 integrates are different from those discussed in relation to Figs. 4 and 5. In this case, the integration periods extend, for instance, from the middle of a first data bit to the middle of a subsequent data bit. More generally, the integration period extends over a last part of the first bit and a higher part of the subsequent bit. The result of a thus implemented integration is shown in line 5 of Fig. 7. Also, in line 5 of Fig. 7 it is indicated at which moments S/R₀ through S/R₈ the output signal of the integrator 15 is sampled. Line 6 shows the result of a sampling carried out accordingly, using the sampling switch 16. Each data bit gives rise to a sample whose absolute value is greater than zero and whose polarity reverses upon reception of a '1' data bit. In this connection, the amplitude of a sample is to some extent dependent on the signal form and bit sequence. The magnitude (amplitude) of a sample, however, is at least 60% of the maximum absolute magnitude of a sample. In Fig. 7, line 6 the successively obtained samples are designated by S0 through S8, respectively. By subtracting from the value of the sample Sₙ taken last, the value of the preceding sample Sₙ₋₁ and taking the absolute value of the outcome thereof, it is found that when a '1' data bit occurs a new sample with a relatively great absolute value remains and that after the occurrence of a '0' data bit a sample with a lesser, relatively small absolute value arises, which may also be equal to zero.

All this is shown in line 7 of Fig. 7. On the basis of the magnitude of the thus successively obtained difference signals a detection decision can be made. Line 8 gives the result thereof. Difference signals which are relatively large are classified as a '1' data bit, while difference signals which are relatively small are classified as a '0' data bit. For obtaining the difference signals as shown in line 7, the detector according to Fig. 6 comprises a memory M and a subtracter circuit 25. The memory element M retains the penultimate sample supplied by the integrator 15 via a sampling switch 16 for one integration period. A subsequent sample supplied by the integrator 15 is applied to the subtracter circuit 25, together with the value of the previous sample stored in the memory element M, for the purpose of obtaining the new sample referred to. In a circuit 26 the absolute value of the new sample is subsequently determined. In the circuit 26 this value is subsequently compared with a detection threshold. If the value is greater than the detection threshold, an output signal 10 is supplied which indicates that a '1' data bit has been detected, whereas when the value is below the detection threshold an output signal 10 is supplied which indicates that a '0' data bit has been detected. The detection threshold can, for instance, be set at a value which is a fraction, for instance half, of the maximum detected value of a plurality of successive new sample values determined by the subtracter circuit 25.

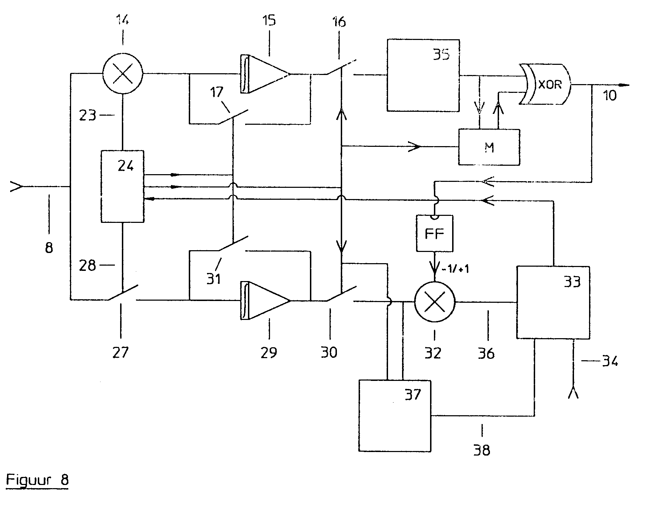

Fig. 8 shows an alternative embodiment of a detector for reconstructing data bits from a biphase modulated signal radiated by a detection label. Corresponding components in Figs. 6 and 8 have again been provided with the same reference characters. According to the alternative embodiment referred to, the polarity of the samples as shown in line 6 of Fig. 7 is determined using a comparator 35. The thus obtained signal is applied to the memory element M and to an exclusive-OR circuit XOR. Using the exclusive-OR circuit XOR, the polarity of the last sample obtained is compared with the polarity of the preceding sample which has been stored in the memory element M. By carrying out the comparison referred to, using the exclusive-OR circuit, the transition of the polarity can be detected and hence the occurrence of a '1' data bit can be determined. Simultaneously, with each new sample where the polarity is equal to the preceding one, the occurrence of a '0' data bit is detected. The result of the thus performed comparison is presented to line 10 by the exclusive-OR circuit XOR for further processing.

Line 9 in Fig. 7 gives the outcome of the comparison performed by the exclusive-OR circuit and hence the detected data bits on line 10.

For the proper operation of the above-described detectors of Figs. 6 and 8, a synchronisation of the template signal and of the integration periods on the received signal is necessary. The timer circuit 24 in Figs. 6 and 8 generates both the template signal 23 and the sampling and reset commands for the switch 16 and 17. To that end, the timer circuit 24 is controlled from a phase accumulator 33. The phase accumulator 33 is clocked round with a fixed clock frequency 34, which clock frequency is derived in known manner from the transmission frequency of the identification label and hence runs in synchronism with the clock in the identification label. Accordingly, the phase accumulator 33 generates an internal clock signal of a frequency which is, for instance, equal to the clock frequency of the received biphase signal or a multiple thereof. More generally, the internal clock signal has the property that the template signal and the sampling and reset commands can be simply derived from it. The internal clock signal must therefore be coupled in phase to the data bit stream (Fig. 1, line 1) in the biphase signal or the clock signal (Fig. 1, line 3) in the biphase signal. The template signal and reset signal are coupled in phase to the internal clock signal. The phase accumulator 33, i.e. the internal clock signal, can be set forward or backward, i.e. be shifted in phase by means of a phase control signal 36. Thus the entire pattern of template signal with the associated integration commands is shifted in phase relative to the signal received from the label. The phase of the internal clock signal is controlled in such a manner that the phase of the template signal corresponds with the phase of the received biphase signal (see also Fig. 7, lines 2 and 3).

The clock information is recovered from the signal transitions which occur both with the '0' data bit and with the '1' data bit. What is involved here is the signal transitions occurring between these data bits. To that end, in the detector according to Figs. 6 and 8 an integrator 29 is used, which is only connected with the received signal 8 by means of a switch 27 during periods which are located symmetrically around the abovementioned signal transitions between the data bits or the data bit boundaries. The length of the integration period should not exceed half the periodic time of the data bit and can preferably be half a bit length. In the case of a half bit length, the integration period starts at a quarter bit length before a bit boundary and ends at a quarter bit period after the bit boundary in question.

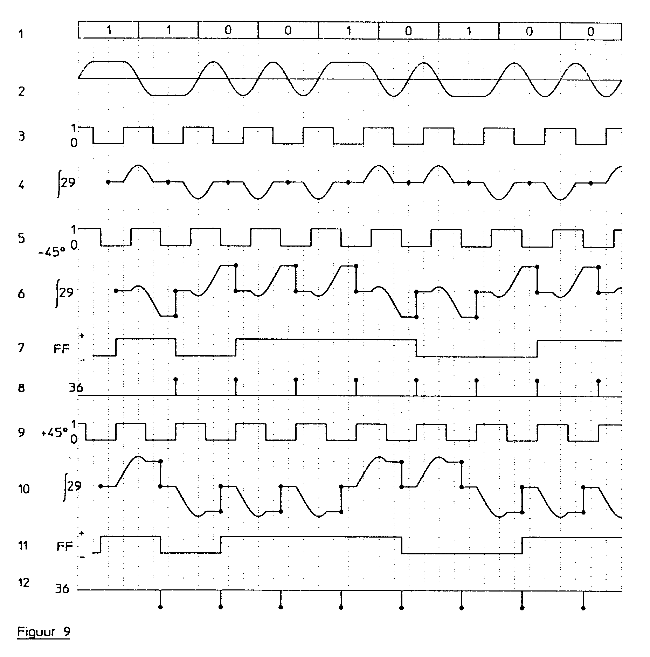

All this will be further clarified with reference to Fig. 9.

Lines 1 and 2 of Fig. 9 correspond with lines 1 and 2 of Fig. 7. Switch 27 is successively closed and opened by a switch signal generated by the timer circuit 24. The switch signal 28 in question is shown in line 3 of Fig. 9. The phase of the switch signal 28 is also coupled directly to the phase of the internal clock signal. In line 3 the switch signal has been chosen such that it has the desired phase. In this example it can also be assumed that the internal clock signal is equal to the switch signal 28, since the clock frequency of the switch signal 28 is equal to the clock frequency of the biphase signal. If the switch signal is high, switch 27 is closed, while the switch is opened again when the switch signal is low. The output signal of the integrator 29 is sampled with a sampling switch 30 and reset with a reset switch 31 at the same moments as when, respectively, the output signal of the integrator 15 is sampled and the integrator 15 is reset, i.e. in the middle of a data bit period.

Line 4 of Fig. 9 shows the outcome of the integration process carried out by means of the integrator 29. It appears from this that at the moments when sampling occurs the output voltage of the integrator 29 is at least substantially equal to zero. However, if the phase is different, the entire pattern of the switch signal 28 shifts and hence the pattern of the sampling moments.

In line 5 it is shown that the phase of the internal clock lags 25° behind the received signal.

Line 6 shows the associated output voltage of the integrator 29. Here this voltage is not zero at the moments when sampling occurs, unlike in the case of the output voltage of the integrator 29 shown in line 4. The voltage now has an absolute value greater than zero for all bits. However, the polarity of the voltage changes upon reception of a '1' data bit. To be able to obtain a control signal with a constant polarity, the samples of the integrator 29 are multiplied by, respectively, +1 of -1 in a multiplier 32 which is shown in Fig. 6. The polarity referred to is determined by means of a flipflop FF which is switched as soon as a '1' data bit is detected. The thus obtained control signal 36 issued by the multiplier 32 is subsequently applied to the phase accumulator 33 which, depending on the magnitude of the control signal, corrects the phase of the internal clock and hence, *inter alia*, the phase of the switch signal 28 in one or more predetermined steps. A step is here meant to refer to a phase shift of a particular predetermined magnitude. The sampling of integrator 29 by means of a sampling switch 30 should in this connection occur in sligthly delayed relation relative to the sampling of integrator 15 by means of sampling switch 16, such that the polarity corrected control signal 36 takes over the value after the flipflop FF has switched upon the occurrence of a '1' data bit.

Lines 9, 10, 11 and 12 of Fig. 9 show the same for the situation where the phase of the clock leads 45°. Line 12 shows that the control signal has a negative polarity. This means that the direction in which the phase of the internal clock and hence, *inter alia*, the phase of the switch signal 28 is adjusted, is dependent on the direction of the deviation of the phase of the switch signal 28, which is necessary to obtain a converging, i.e. stable control operation.

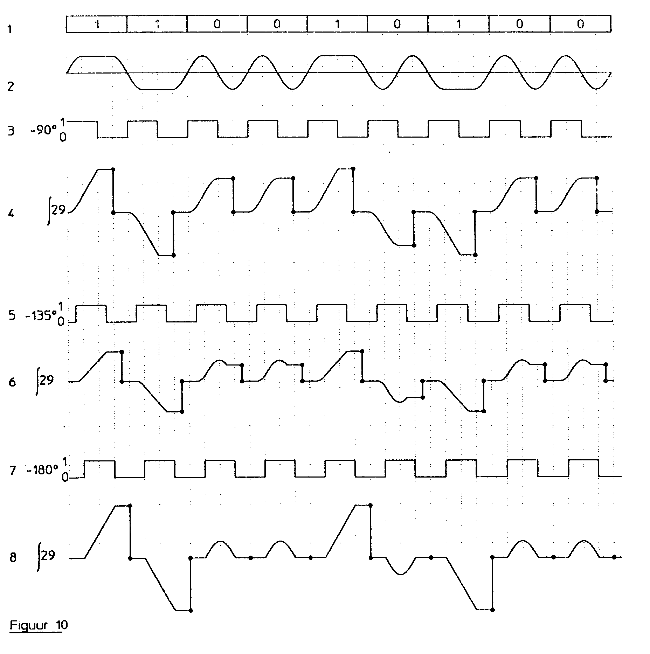

Because the detection of the '1' data bits is of importance for a converging operation of the above-discussed control loop, the control loop will start functioning less well in the case of phase errors greater than 90°. In accordance with a particular aspect of the invention, a solution to this problem has been found. The situation where the phase error is 90° or more is shown in Fig. 10. The switch signals 28 shown in lines 3 and 4 of Fig. 10 comprise the 90° lag relative to the switch signals 28 as shown in lines 3 and 4 of Fig. 9. Similarly, the signals shown in lines 5 and 6 comprise a phase lag of 135° and lines 7 and 8 show signals with a phase lag of 180°. In contrast with the situation in the case of phase errors smaller than 90° (Fig. 9), it appears that large differences start to occur in the output voltages of the integrator 29 at the sampling moments between the reception of a '1' data bit and the reception of a '0' data bit. Precisely with a phase error of 180°, the samples are maximal in amplitude in the case of a '1' data bit and minimal in amplitude in the case of a '0' data bit. This phenomenon provides the possibility of carrying out a separate control in the case of large phase errors, i.e., phase errors of, for instance, 135° to 225°, for instance by causing the phase accumulator 33 to make a single phase step of 180°. Thereafter, the phase error will be less than 45° and the control loop finds itself with certainty in the converging, i.e., stable range.

Fig. 8 shows the implementation for carrying out such a separate control and to that end comprises a circuit 37. Corresponding parts in Figs. 6 and 8 have been provided with the same reference characters. The circuit 37 receives the samples from integrator 29 and determines the absolute value of the samples and compares the samples with each other. For carrying out this action a control signal is applied to the circuit 37, which corresponds with the control signal which is applied to the sampling switches 16 and 30. The circuit 37 then analyses each time the amplitude of a sample when under the control of the control signal a new sample has been provided by closure of the switch 30. The circuit 37 is so designed that an additional control signal 38 is fed to the phase accumulator 33 when the amplitude of the samples differ from each other by more than a predetermined factor, for instance a factor of 2. The result of this control signal 38 is that the phase of the signal generated by the phase accumulator is shifted by a large step, for instance 180°.

Thus a synchronisation circuit has been obtained which quickly finds the correct synchronisation under all circumstances. This synchronisation is also unequivocal; there is only one stable point, in contrast with what is the case with the known Costas loop. In fact, the Costas loop has two stable solutions, however, the value of the sign depends on the fact in which solution the control loop is operative.

The above-described synchronisation circuit is not only useful for the detection circuit according to the invention, but is also suitable for the above-described correlator receiver according to Fig. 4.

It will be clear to a person of ordinary skill in the present art that both the described data detector and the associated synchronisation circuit can be designed in whole or in part as an algorithm in a Digital Signal Processor. This embodiment is understood to fall within the scope of the invention.

## Claims

1. An identification or smart card system comprising a reader unit and at least one responder which codes data bits, comprising means for modulating a subcarrier with information representing data bits by means of differential biphase modulation of a subcarrier to obtain a differential biphase modulated signal which is radiated by the responder to be detected by the reader unit, the reader unit comprising a data detector for recovering the data bits from the received differential biphase modulated signal,
characterized in that the data detector comprises a correlator circuit which multiplies the received differential biphase signal by a template signal and integrates the signal obtained upon multiplication over an integration period which runs over a last part of the time span in which a first data bit is present and a subsequent initial part of a time span in which a second data bit, following the first data bit, is present, the correlator circuit processing the outcome of the integration performed over a first period in combination with the outcome of an integration which has been performed over a second period directly following the first period for recovering said data bits.

2. A system according to claim 1, characterized in that the template signal corresponds with the unmodulated subcarrier.

3. A system according to claim 1 or 2, characterized in that in the correlator circuit the outcomes of the said two integration periods are subtracted from each other, the absolute value of the difference accordingly obtained representing a '1' data bit if this value is relatively high and representing a '0' data bit when this value is relatively low.

4. A system according to claim 3, characterized in that the correlator circuit comprises a multiplier for carrying out said multiplication, an integrator for carrying out said integration, a sampling switch with which an output signal of the integrator is sampled to obtain the said outcomes of the integrations performed, a reset switch for resetting the integrator at a predetermined value after the outcome of an integration performed has been obtained using the sampling switch and before a next integration is performed, a memory for storing the outcome of the integration performed over the first period, a subtracter circuit for determining the difference between the outcome of the integration performed over the second period and the outcome of the integration performed over the first period, stored in the memory, and a comparator for comparing the absolute value of the difference with a predetermined value, the comparator generating a '0' data bit when the absolute value of the difference is smaller than the predetermined value and generating a '1' data bit when the absolute value of the difference is greater than the predetermined value.

5. A system according to claim 1 or 2, characterized in that the correlator circuit determines the polarity of the outcomes of the integrations performed over the first and second periods and compares the two polarities with each other for obtaining said data bits.

6. A system according to claim 5, characterized in that the correlator circuit generates a '1' data bit when the said polarities are different and generates a '0' data bit when the said polarities are equal.

7. A system according to claim 5 or 6, characterized in that the correlator circuit comprises a multiplier for performing said multiplication, an integrator for performing said integration, a sampling switch with which an output signal of the integrator is sampled to obtain said outcomes of the integrations performed, a reset switch for resetting the integrator at a predetermined value after the outcome of an integration performed has been obtained using the sampling switch and before a next integration is performed, a comparator for determining the polarity of the outcomes of the integration performed, a memory for storing the polarity of the result of the integration performed over the first period, and an exclusive-OR circuit for comparing the polarity of the outcome of the integration performed over the first period as stored in the memory and the polarity of the outcome of the integration performed over the second period.

8. A system according to any one of the preceding claims, characterized in that the subcarrier comprises a clock signal, the data detector further comprising a synchronisation circuit for controlling the phase of an internal clock circuit, the synchronisation circuit integrating the received differential biphase signal over an integration period smaller than a period of a data bit and adjusts the phase of the internal clock signal on the basis of the obtained results of the last-mentioned integration performed.

9. A system according to claim 8, characterized in that the phase of the internal clock signal is adjusted on the basis of the absolute value of the results of the integration performed.

10. A system according to claim 8 or 9, characterized in that the synchronisation circuit comprises means which are known per se for determining a clock frequency of the clock signal present in the received differential biphase signal and for generating the internal clock signal with a clock frequency which is equal to the clock frequency of the received differential biphase signal.

11. A system according to any one of the preceding claims, characterized in that the reader unit generates an interrogation field which is modulated by the responder when the responder is introduced into the interrogation field, the responder transforming the differential biphase modulated signal in frequency, so that this signal is transmitted in a side band of the interrogation field.

12. A system according to any one of the preceding claims, characterized in that the reader unit detects the differential biphase signal according to the absorption principle.

13. A system according to any one of the preceding claims, characterized in that the reader unit detects the differential biphase signal according to the transmission principle.

14. A system according to any one of the preceding claims, characterized in that the data detector comprises a digital signal processor which functions as a correlator circuit.

15. A system according to any one of the preceding claims 7-9, characterized in that the data detector comprises a digital signal processor which functions as a synchronisation circuit.

16. A system according to claims 14 and 15, characterized in that the data processor comprises a digital signal processor which functions as a correlator circuit and synchronisation circuit.

17. A correlator circuit suitable for use in a system according to any one of the preceding claims.

18. A synchronisation circuit suitable for use in a system according to any one of the preceding claims 1-16.
